# EUROPEAN PATENT APPLICATION

(11) **EP 1 930 183 A1**
(43) Date of publication of application: **11.06.2008**
(21) Application number: 06025070.1
(22) Date of filing: 05.12.2006
(51) Int. Cl.: B60B 27/02

(54) **Bicycle rear hub having enhanced strength**

(71) Applicant: Chosen Co., Ltd., Sheng Sei Shung, Changhua Hsien (TW)
(72) Inventor: Chen, Ching-Shu, Changhua City, Changhua County (TW)
(74) Representative: Reichel, Wolfgang

(57) **Abstract**

A rear hub for a bicycle includes a shaft (20), a hub body (10) mounted on the shaft, two races (30) each mounted between the shaft and the hub body, two tapered bearings (40) each mounted between the shaft and a respective race, a protruding pull block (23) mounted on a first end of the shaft (20) and rested on a first tapered bearing (40) and a locking nut (60) secured on a second end of the shaft (20) and rested on a second tapered bearing (40). Thus, the user only needs to screw the locking nut (60) onto the shaft to pull the pull block (23) to clamp the tapered bearings (40) and the respective races (30), so that the rear hub is assembled easily, quickly and conveniently.

## Description

The present invention relates to a hub and, more particularly, to a rear hub for a bicycle.

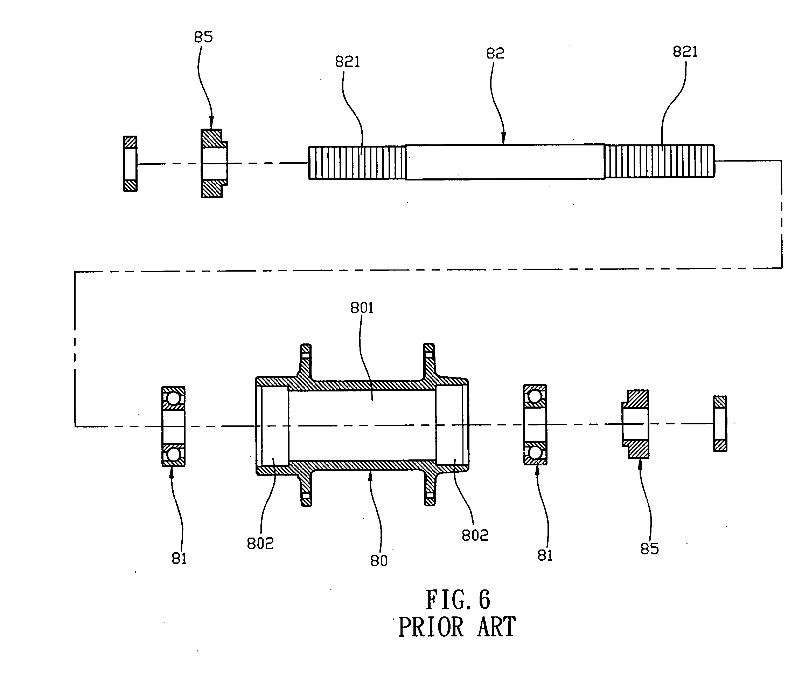

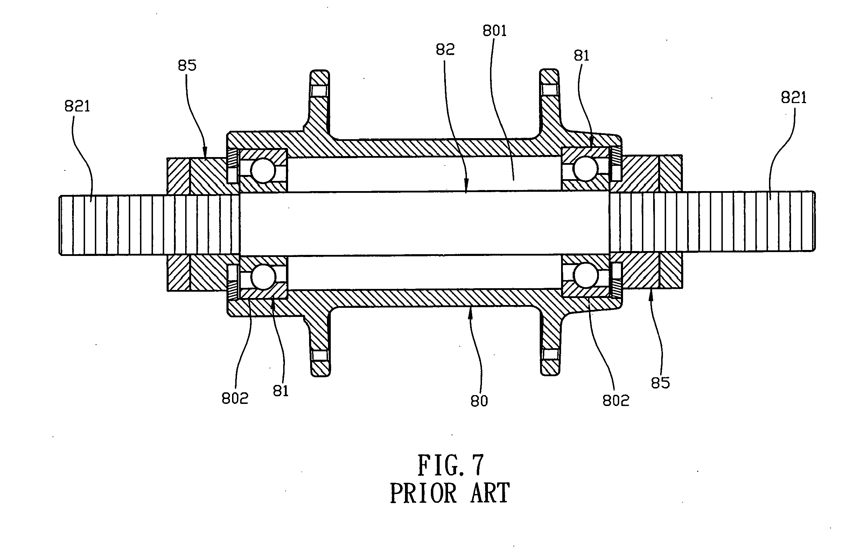

A conventional rear hub for a bicycle in accordance with the prior art shown in Figs. 6 and 7 comprises a shaft 82 having two ends each formed with an outer thread 821, a hub body 80 rotatably mounted on the shaft 82, two ball bearings 81 each mounted between the shaft 82 and the hub body 80, and two locking nuts 85 each screwed onto the respective outer thread 821 of the shaft 82 and each rested on a respective ball bearing 81. The hub body 80 has a hollow inside 801 having two ends each formed with a receiving recess 802 to receive a respective ball bearing 81.

However, the user has to screw the two locking nuts 85 onto the respective outer threads 821 of the shaft 82, so that the rear hub is not assembled easily and conveniently. In addition, when the rear hub is subjected to an external force, the external force is concentrated on the ball bearings 81, so that the ball bearings 81 are easily worn out or broken due to a stress concentration, thereby decreasing the lifetime of the ball bearings 81. Further, when one of the two locking nuts 85 is loosened, too, from the respective outer thread 821 of the shaft 82, the ball bearings 81 are easily loosened, thereby affecting operation of the rear hub.

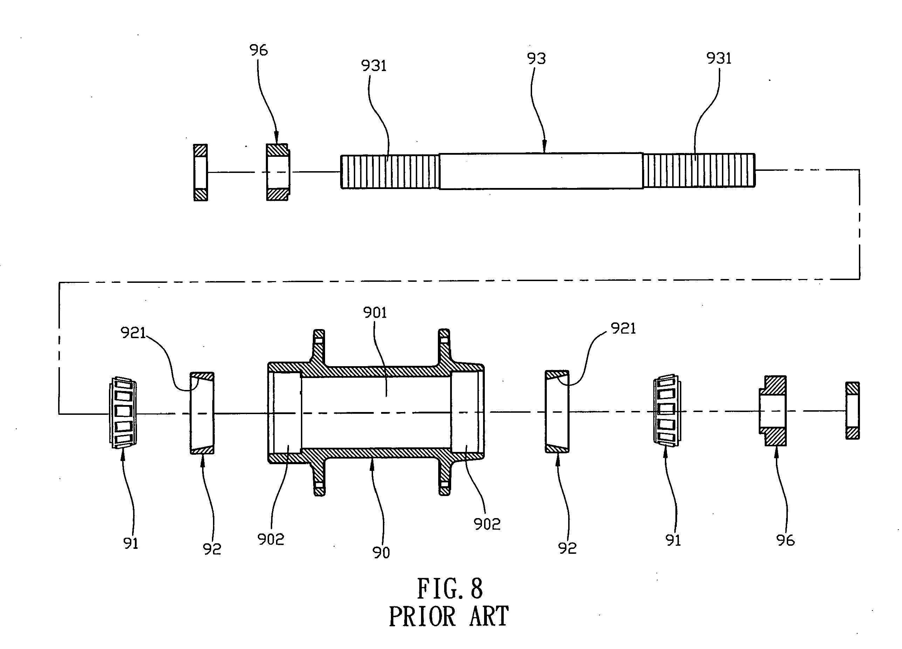

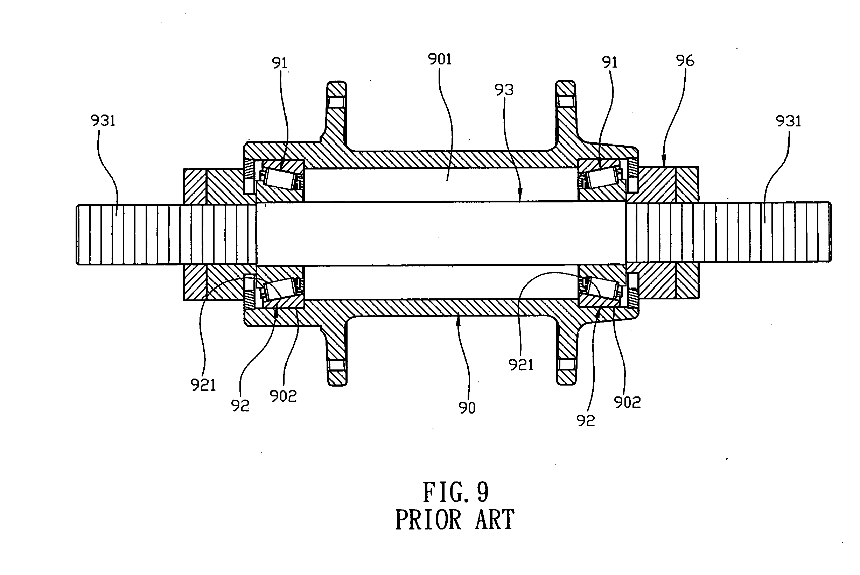

Another conventional rear hub for a bicycle in accordance with the prior art shown in Figs. 8 and 9 comprises a shaft 93 having two ends each formed with an outer thread 931, a hub body 90 rotatably mounted on the shaft 93, two races 92 each mounted between the shaft 93 and the hub body 90, two tapered bearings 91 each mounted between the shaft 93 and a respective race 92, and two locking nuts 96 each screwed onto the respective outer thread 931 of the shaft 93 and each rested on a respective tapered bearing 91. The hub body 90 has a hollow inside 901 having two ends each formed with a receiving recess 902 to receive a respective race 92. Each of the races 92 has an inner wall formed with a tapered hole 921 rested on the respective tapered bearing 91.

However, the user has to screw the two locking nuts 96 onto the respective outer threads 931 of the shaft 93, so that the rear hub is not assembled easily and conveniently. In addition, when one of the two locking nuts 96 is loosened from the respective outer thread 931 of the shaft 93, the tapered bearings 91 are easily loosened, too, thereby affecting operation of the rear hub.

The primary object of the present invention is to provide a bicycle rear hub having greater strength.

Another object of the present invention is to provide a rear hub for a bicycle, wherein the user can assemble the rear hub easily, quickly and conveniently, so that mounting the rear hub is facilitated.

A further object of the present invention is to provide a rear hub for a bicycle, wherein the tapered bearings and the respective races are mounted between the shaft and the hub body rigidly and stably, thereby enhancing the strength of the rear hub.

A further object of the present invention is to provide a rear hub for a bicycle, wherein when one or both of the tapered bearings are subjected to an external force, such external force is prevented from directly hitting the tapered bearings, thereby preventing the tapered bearings from being worn out or broken due to a stress concentration so as to enhance the lifetime of the tapered bearings.

In accordance with the present invention, there is provided a hub, comprising a shaft, a hub body rotatably mounted on the shaft, two races each mounted between the shaft and the hub body, two tapered bearings each mounted between the shaft and a respective race, a protruding pull block 20 mounted on a first end of the shaft and rested on a first of the tapered bearings, and a locking nut secured on a second end of the shaft and rested on a second of the tapered bearings, so that the tapered bearings are limited between the pull block and the locking nut.

Further benefits and advantages of the present invention will become apparent after a careful reading of the detailed description with appropriate reference to the accompanying drawings.

In the drawings:
- Figure 1: is a perspective view of a rear hub for a bicycle in accordance with the preferred embodiment of the present invention.
- Figure 2: is an exploded perspective view of the rear hub as shown in Fig.1.
- Figure 3: is a plan exploded cross-sectional view of the rear hub as shown in Fig. 1.
- Figure 4: is a plan cross-sectional view of the rear hub as shown in Fig.1
- Figure 5: is a schematic operational view of the as shown in Fig. 4
- Figure 6: is a plan exploded cross-sectional view of a conventional rear hub for a bicycle in accordance with the prior art.
- Figure 7: is a plan cross-sectional assembly view of the conventional rear hub as shown in Fig. 6.
- Figure 8: is a plan exploded cross-sectional view of a other conventional rear hub for a bicycle in accordance with the prior art.
- Figure 9: is a plan cross-sectional assembly view of the conventional rear hub as shown in Fig. 8.

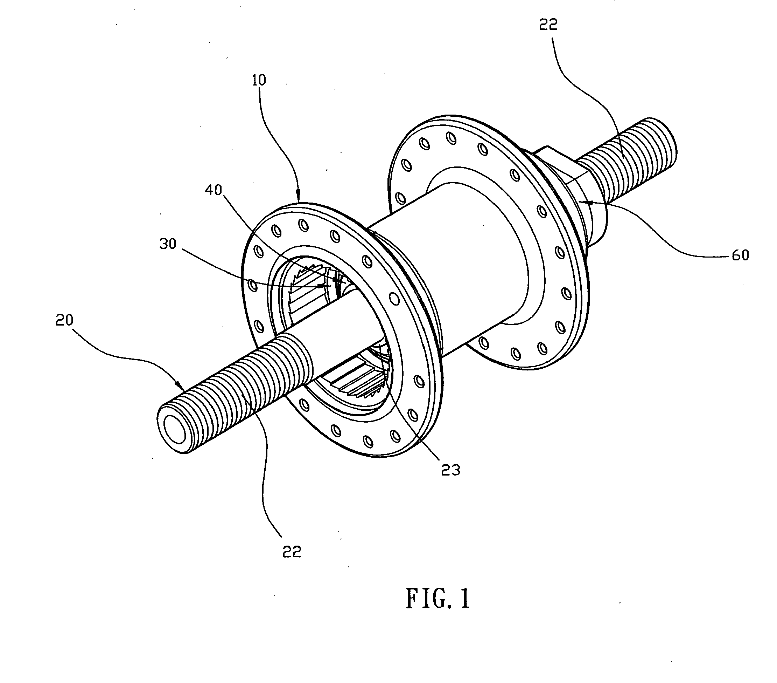

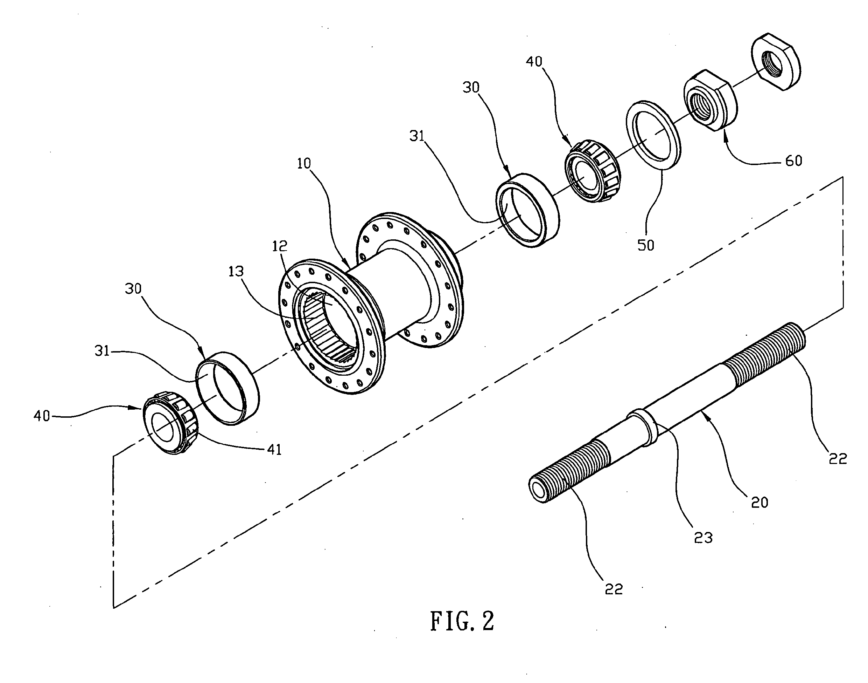

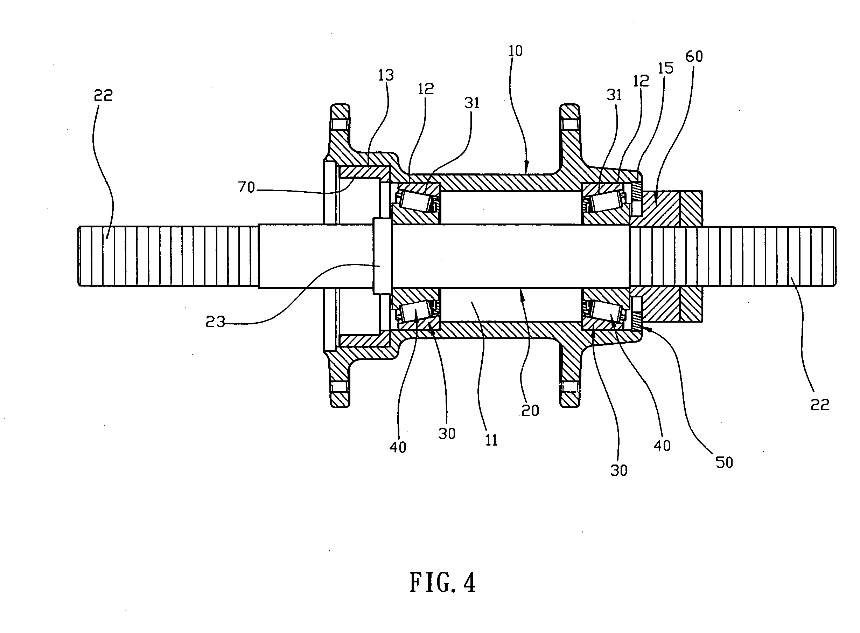

Referring to the drawings and initially to Figs. 1-4, a rear hub for a bicycle in accordance with the preferred embodiment of the present invention comprises a shaft 20, a hub body 10 rotatably mounted on the shaft 20, two races 30 each mounted between the shaft 20 and the hub body 10, two tapered bearings 40 each mounted between the shaft 20 and a respective race 30, a protruding pull block 23 mounted on a first end of the shaft 20 and rested on a first of the tapered bearings 40, and a locking nut 60 secured on a second end of the shaft 20 and rested on a second of the tapered bearings 40, so that the tapered bearings 40 are limited between the pull block 23 and the locking nut 60.

The hub body 10 has a hollow inside 11 formed with two spaced receiving chambers 12 each having a stepped shape to receive the respective races 30 together with the respective tapered bearings 40. The inside 11 of the hub body 10 has a first end formed with a receiving groove 13 having a stepped shape to receive a ratchet wheel 70 and a second end formed with a locking groove 15 having a stepped shape to receive a bushing 50 which is located between the locking nut 60 and the second of the tapered bearings 40. The 20 receiving groove 13 of the hub body 10 is located outside of and has a diameter greater than that of a respective receiving chamber 12, and the locking groove 15 of the hub body 10 is located outside of and has a diameter greater than that of a respective receiving chamber 12.

The shaft 20 has two distal ends each formed with an outer thread 22, and the locking nut 60 is screwed onto the respective outer thread 22 of the shaft 20 to pull the pull block 23 toward the tapered bearings 40 so that the tapered bearings 40 are pressed toward each other by compression of the pull block 23 and the locking nut 60. The pull block 23 has an annular shape and is integrally formed on the first end of the shaft 20.

Each of the races 30 has an annular shape and has an inner wall 10 formed with a tapered face 31 which is inclined outwardly toward the respective tapered bearing 40.

Each of the tapered bearings 40 is received in the respective race 30. Each of the tapered bearings 40 is a roller bearing and has a periphery formed with a tapered face 41 rested on the tapered face 31 of the respective race 30. The tapered face 41 of each of the tapered bearings 40 is inclined inwardly toward the respective race 30.

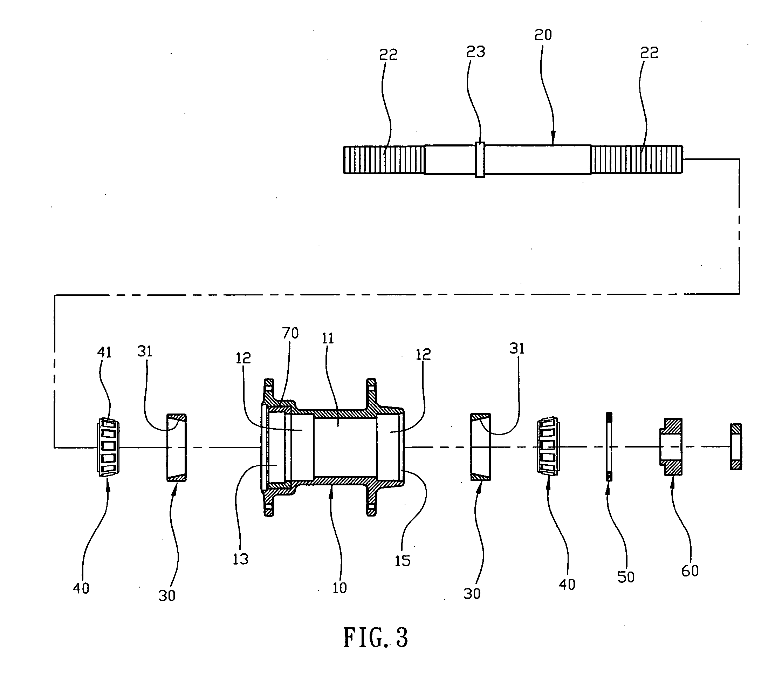

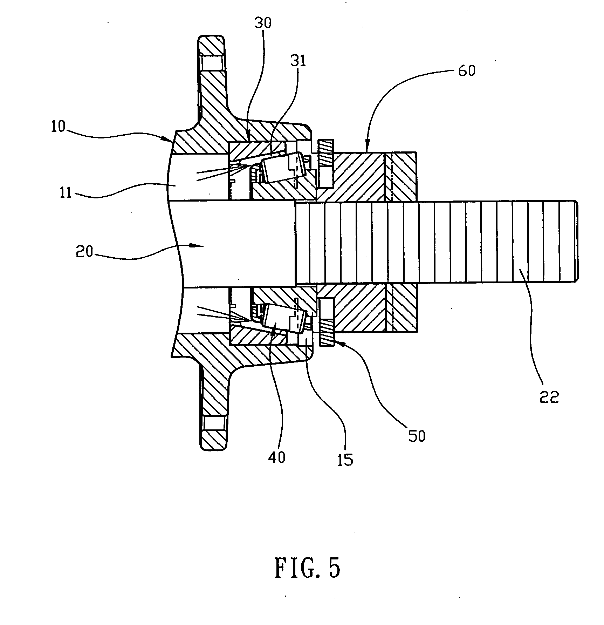

When in use, referring to Figs. 1-5, a rear wheel (not shown) is mounted on the hub body 10 to rotate therewith. When the rear wheel is subjected to an external force during travel of the bicycle, the external force is mainly concentrated on the races 30 and the respective tapered bearings 40 mounted between the shaft 20 and the hub body 10. At this time, when each of the tapered bearings 40 is subjected to the external force, each of the tapered bearings 40 is moved outwardly by guidance of the tapered face 31 of the respective race 30 as shown in Fig. 3 to prevent the external force from directly hitting each of the tapered bearings 40, thereby preventing each of the tapered bearings 40 from being worn out or broken due to a stress concentration so as to enhance the lifetime of the tapered bearings 40.

Accordingly, the user only needs to screw and tighten the locking nut 60 onto the respective outer thread 22 of the shaft 20 to pull the pull block 23 so as to clamp and position the tapered bearings 40 and the respective races 30, so that the rear hub is assembled easily, quickly and conveniently, thereby facilitating the user mounting the rear hub. In addition, when the tapered bearings 40 are clamped by the pull block 23 and the locking nut 60, the tapered bearings 40 are moved inwardly toward each other and are compressed by the tapered faces 31 of the respective races 30, so that the tapered bearings 40 and the respective races 30 are mounted between the shaft 20 and the hub body 10 rigidly and stably, thereby enhancing the strength of the rear hub.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A hub, comprising:
a shaft (20) ;
a hub body (10) rotatably mounted on the shaft (20);
two races (30) each mounted between the shaft (20) and the hub body (10);
two tapered bearings (40) each mounted between the shaft (20) and a
respective race (30);
a protruding pull block (23) mounted on a first end of the shaft (20) and rested on a first of the tapered bearings (40);
a locking nut (60) secured on a second end of the shaft (20) and rested on a second of the tapered bearings (40), so that the tapered bearings (40) are limited between the pull block (23) and the locking nut (60).

2. The hub in accordance with claim 1, wherein the hub body (10) has a hollow (11) inside formed with two spaced receiving chambers (12) to receive the respective races (30) together with the respective tapered bearings (40).

3. The hub in accordance with claim 2, wherein the inside of the hub body (11) has a first end formed with a receiving groove (13) to receive a ratchet wheel (70) and a second end formed with a locking groove (15) to receive a bushing (50) which is located between the locking nut (60) and the second of the tapered bearings (40).

4. The hub in accordance with claim 3, wherein the receiving groove (13) of the hub body (10) has a stepped shape.

5. The hub in accordance with claim 3, wherein the locking groove (15) of the hub body (10) has a stepped shape.

6. The hub in accordance with claim 3, wherein the receiving groove (13) of the hub body (10) is located outside of and has a diameter greater than that of a respective receiving chamber (12).

7. The hub in accordance with claim 3, wherein the locking groove (15) of the hub body (10) is located outside of and has a diameter greater than that of a respective receiving chamber (12).

8. The hub in accordance with claim 1, wherein the shaft (20) has two distal ends each formed with an outer thread (22), and the locking nut (60) is screwed onto the respective outer thread (22) of the shaft (20) to pull the pull block (23) toward the tapered bearings (40) so that the tapered bearings are pressed toward each other by compression of the pull block (23) and the locking nut (60).

9. The hub in accordance with claim 1, wherein the pull block (23) has an annular shape.

10. The hub in accordance with claim 1, wherein the pull block (23) is integrally formed on the first end of the shaft (20).
